# EUROPÄISCHE PATENTANMELDUNG

(11) **EP 4 841 129 A1**
(43) Veröffentlichungstag der Anmeldung: **18.11.2026**
(21) Anmeldenummer: 26178004.3
(22) Anmeldetag: 11.05.2026
(51) Int. Cl.: F16F 9/36

(54) **TANKPLATTENSYSTEM**

(30) Priorität: 13.05.2025 DE 102025118381
(71) Anmelder: ANDRITZ AWEBA GmbH, 08280 Aue-Bad Schlema (DE)
(72) Erfinder: HÖLIG, René, 08289 Schneeberg (DE); HEINRICH, Thomas, 08060 Zwickau (DE); SCHNEIDENBACH, Lutz, 08107 Hartmannsdorf (DE); KLUG, Dirk, 08315 Lauter-Bernsbach (DE)
(74) Vertreter: RavensPAT Patentanwälte Partnerschaft mbB

(57) **Zusammenfassung**

Die Erfindung betrifft ein Tankplattensystem (101) umfassend eine Tankplatte (102) und Einschraubfedern (103), wobei die Tankplatte (102) eine der Zahl der Einschraubfedern (103) entsprechende Zahl von Aufnahmen (104) für Einschraubfedern (103) umfasst, wobei die Aufnahmen (104) als Gewindebohrungen (105) ausgebildet sind, welche in ein Kanalsystem (106) der Tankplatte (102) münden oder dieses durchlaufen, wobei jede der Einschraubfedern (103) in eine der Aufnahmen (104) eingesetzt ist, wobei jede der Einschraubfedern (103) einen Kolben (109) und einen Zylinderkopf umfasst, wobei der Kolben (109) schiebebeweglich durch eine Durchgangsbohrung (112) des Zylinderkopfs geführt ist.

## Beschreibung

Die Erfindung betrifft ein Tankplattensystem gemäß dem Oberbegriff des Anspruchs 1.

Tankplattensysteme werden insbesondere in Pressen als Federn eingesetzt. Gegenüber herkömmlichen Federn weisen sie insbesondere eine höhere Lebensdauer und günstigere Federraten auf. Ein derartiges Tankplattensystem ist z.B. aus der DE 44 26 393 C1 bekannt.

Der Erfindung liegt die Aufgabe zugrunde, ein Tankplattensystem vorzuschlagen, welches gegenüber bisherigen Tankplattensystemen verbessert ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Tankplattensystem umfasst eine Tankplatte und Einschraubfedern,
- wobei die Tankplatte eine der Zahl der Einschraubfedern entsprechende Zahl von Aufnahmen für Einschraubfedern umfasst,
- wobei die Aufnahmen als Gewindebohrungen ausgebildet sind, welche in ein Kanalsystem der Tankplatte münden oder dieses durchlaufen,
- wobei jede der Einschraubfedern in eine der Aufnahmen eingesetzt ist,
- wobei jede der Einschraubfedern einen Kolben und einen Zylinderkopf umfasst,
- wobei der Kolben schiebebeweglich durch eine Durchgangsbohrung des Zylinderkopfs geführt ist,
- wobei der Zylinderkopf an der Tankplatte gehalten ist,
- wobei an einer Innenwand des Zylinderkopfs eine erste umlaufende Vertiefung und eine zweite umlaufende Vertiefung ausgebildet sind,
- wobei in der ersten umlaufenden Vertiefung ein Abstreifer angeordnet ist, welcher an dem Kolben anliegt,
- wobei in der zweiten umlaufenden Vertiefung ein Führungsring angeordnet ist, welcher an dem Kolben anliegt,
- wobei an dem Zylinderkopf eine Dichtung abgestützt ist, welche an dem Kolben anliegt,
- wobei der Zylinderkopf einstückig ausgebildet ist,
- wobei der Abstreifer von dem Führungsring in axialer Richtung einen Abstand aufweist, welcher kleiner ist als eine Hälfte einer in axialer Richtung des Kolbens gemessen Breite des Führungsrings.

Hierdurch sind Abstreifer, Dichtung und Führungsring zuverlässig und auf engem Raum angeordnet und gleichzeitig ist der Zylinderkopf massiv ausgebildet, so dass dieser eine gute Wärmeabfuhr garantiert und mechanisch hoch belastbar ist. Die Fertigung ist hierdurch ebenfalls vereinfacht.

Es kann auch vorgesehen sein, jede der Einschraubfedern mit einen durch eine Hülse gebildeten Zylinder auszustatten. Hierdurch ist es möglich die Einschraubfedern schon vor der Montage an der Druckplatte zu testen und so sicherzustellen, dass nur voll funktionsfähige Einschraubfedern verbaut werden.

Es kann auch vorgesehen sein, den Zylinderkopf einzuschrauben und diesen hierzu mit einem Außengewinde zu versehen, wobei es insbesondere vorgesehen ist, den Zylinderkopf direkt mit der Tankplatte zu verschrauben oder den Zylinderkopf indirekt unter Zwischenlage der Hülse mit der Tankplatte zu verschrauben. Hierdurch ist der Zylinderkopf zuverlässig an der Tankplatte gehalten.

Weiterhin kann es vorgesehen sein, den Zylinderkopf auf gleicher Höhe oder unterhalb einer Oberseite der Tankplatte zu positionieren, wobei der Kolben in seinem eingefahrenen Zustand bündig mit der Oberseite der Tankplatte abschließt. Hierdurch weist das Tankplattensystem kompakte Abmessungen auf, da für das Tankplattensystem nur eine der Dicke der Tankplatte entsprechende Einbauhöhe benötigt wird.

Es kann auch vorgesehen sein, den Abstreifer mit einer Lippe auszubilden und die erste umlaufende Vertiefung derart gestuft auszubilden und zu positionieren, dass sich diese zu einer Oberseite des Zylinderkopfs in axialer Richtung betrachtet mit einem ringförmigen Kanal öffnet und dass die Lippe des Abstreifers in diesem ringförmigen Kanal aufgenommen ist. Hierdurch ist auch im Bereich der Lippe eine zuverlässige Wärmeabfuhr über den Zylinderkopf sichergestellt.

Schließlich kann es vorgesehen sein, das Tankplattensystem eine Deckplatte umfasst, welche die Zylinderköpfe abdeckt und für jeden der Kolben eine Durchgangsbohrung aufweist. Hierdurch ist es zuverlässig verhindert, dass einer oder mehrere der Zylinderköpfe bei unerwartet hohem Druck aus der Tankplatte gedrückt wird.

Es kann auch vorgesehen sein, das Außengewinde des Zylinderkopfs in axialer Richtung betrachtet auf einer Höhe der ersten ringförmigen Vertiefung und/oder der zweiten ringförmigen Vertiefung auszubilden. Hierdurch ergibt sich ein kompakter und damit stabiler Aufbau des Zylinderkopfs.

Weiterhin kann es vorgesehen sein, die Hülse der Einschraubfeder als eine Einschraubhülse auszubilden, die Einschraubhülse mit einem Außengewinde in die Aufnahmen der Tankplatte einzuschrauben und den Zylinderkopf mit seinem Außengewinde in ein Innengewinde der Einschraubhülse einzuschrauben. Hierdurch kann die Einschraubhülse besonders kurz und damit materialsparende ausgebildet sein.

Es kann auch vorgesehen sein, die Dichtung zwischen dem Zylinderkopf und der Einschraubhülse zu halten. Hierdurch kann auf ein zusätzliches Bauteil verzichtet werden.

Weiterhin kann es vorgesehen sein, mittels eines oberen Abschnitts der Einschraubhülse den Zylinderkopf und eine zusätzliche Dichtung aufzunehmen. Hierdurch bildet die Einschraubhülse das tragende Bauteil der Einschraubfeder, an welchem alle weiteren Bauteile der Einschraubfeder direkt oder indirekt ausgerichtet sind. Entsprechend ist mit einer derartigen Bauweise eine hohe Maßhaltigkeit bei einfacher Realisierung einer Abdichtung zwischen der Einschraubhülse und dem Zylinderkopf erzielbar.

Es kann auch vorgesehen sein, das Außengewinde des Zylinderkopfs unterhalb eines an einer Mantelfläche des Zylinderkopfes anliegenden Dichtungsring auszubilden, mit welchem der Zylinderkopf gegen die Tankplatte abgedichtet ist. Hierdurch kann der Dichtungsring zwischen den Zylinderkopf und die Tankplatte eingeklemmt werden, um diesen zuverlässig einer vorgesehen Position zu halten.

Weiterhin kann es vorgesehen sein, an einer Innenwand der Durchgangsbohrung des Zylinderkopfs eine dritte ringförmige Vertiefung auszubilden, in welcher ein zweiter Führungsring aufgenommen ist, derart dass der zweite Führungsring zwischen dem ersten Führungsring und der Dichtung angeordnet ist. Hierdurch ist eine verbesserte Führung des Kolbens erreicht.

Es kann auch vorgesehen sein, die Hülse der Gasdruckfeder als Einsteckhülse auszubilden, wobei die Einschraubfeder ein Zentrierstück und ein Hülsenrohr umfasst, wobei das Zentrierstück zwischen dem Zylinderkopf und dem Hülsenrohr angeordnet ist und wobei der Zylinderkopf und das Hülsenrohr durch das Zentrierstück aufeinander ausgerichtet sind. Hierdurch ist eine Montage der Einsteckhülse vereinfacht und kostengünstiger, da ein Einschrauben nicht erforderlich ist.

Weiterhin kann es vorgesehen sein, den Zylinderkopf und das Hülsenrohr durch das Zentrierstück voneinander zu beabstanden, wobei der Zylinderkopf in axialer und radialer Richtung an dem Zentrierstück anliegt und wobei das Hülsenrohr in axialer und radialer Richtung an dem Zentrierstück anliegt. Hierdurch ist es möglich, über den Zylinderkopf indirekt Druck auf das Hülsenrohr, welches sich an der Tankplatte abstützt, auszuüben.

Weiterhin kann es vorgesehen sein, jeder der Einschraubfedern eine Verschluss-Schraube zuzuordnen, sofern eine für diese vorgesehene Gewindebohrung das Kanalsystem der Tankplatte durchläuft, wobei eine untere Öffnung der Gewindebohrung durch die Verschlussschraube verschlossen ist, wobei die Hülse zwischen dem Zylinderkopf und der Verschluss-Schraube gehalten ist und wobei eine Wandung der Hülse im Bereich des Kanalsystems eine oder mehrere Öffnungen umfasst. Hierdurch müssen an der Verschlussschraube keine Eintrittsöffnungen vorgesehen sein und diese kann somit vereinfacht und damit kostengünstiger ausgebildet werden.

Es kann auch vorgesehen sein, die mehreren Öffnungen derart an einem unteren Ende der Hülse anzuordnen, dass die Hülse zu der Verschlussschraube hin ähnlich einer Hirth-Verzahnung ausgebildet ist. Bei einer derartigen Ausbildung kann Druckgas umlaufend im Bereich der Verschlussschraube in die Hülse ein- und austreten.

Weiterhin kann es vorgesehen sein, mittels einer Wandung der Aufnahme eine Führungsfläche zu bilden, an welcher die Kolbenscheibe des Kolbens bei einer Aus- und Einfahrbewegung des Kolbens geführt ist. Hierdurch ist eine besonders kostengünstige Ausführung des Tankplattensystem möglich, da bei allen Einschraubfedern auf das Bauteil einer einen Zylinder bildenden Hülse verzichtet werden kann.

Schließlich kann es auch vorgesehen sein, mittels eines Abschnitts einer Wandung des Kanalsystems eine weitere Führungsfläche zu bilden, an welcher eine Kolbenscheibe des Kolbens bei einer Aus- und Einfahrbewegung des Kolbens geführt ist. Hierdurch ist eine besonders kompakter Aufbau des Tankplattensystems möglich, das der Kolben mit seiner Kolbenscheibe bei einer derartigen Ausführung bis in das Kanalsystem eintauchen kann.

Eine realisierbare Eintauchtiefe ist selbstverständlich von einer Dicke der Kolbenscheibe abhängig, da diese nur so tief in das Kanalsystem eintauchen darf, dass sicher vermieden ist, dass Druckgas in die Aufnahme strömt.

Im Sinne der Erfindung wird unter einer Einschraubfeder ein Gasdruckfeder verstanden, welche in eine Aufnahme einer Tankplatte eingeschraubt ist und mit einem Kanalsystem der Tankplatte derart in Verbindung steht, dass ein in dem Kanalsystem vorherrschender Gasdruck auf einen Kolben der Gasdruckfeder wirkt.

Weitere Einzelheiten der Erfindung werden in der Zeichnung anhand von schematisch dargestellten Ausführungsbeispielen beschrieben.

Hierbei zeigt:
- Figur 1:: einen Ausschnitt eines erfindungsgemäßen Tankplattensystems in einer ersten Ausführungsvariante A in teilweise geschnittener Darstellung;
- Figur 2:: ein Detail der Figur 1, wobei eine Einschraubfeder geschnitten dargestellt ist und ein Deckel ausgeblendet ist;
- Figur 3:: einen Ausschnitt eines erfindungsgemäßen Tankplattensystems in einer zweiten Ausführungsvariante B in teilweise geschnittener Darstellung;
- Figur 4:: ein Detail der Figur 3, wobei eine Einschraubfeder geschnitten dargestellt ist und ein Deckel ausgeblendet ist;
- Figur 5:: einen Ausschnitt eines erfindungsgemäßen Tankplattensystems in einer dritten Ausführungsvariante C in teilweise geschnittener Darstellung;
- Figur 6:: ein Detail der Figur 5, wobei eine Einschraubfeder geschnitten dargestellt ist und ein Deckel ausgeblendet ist.

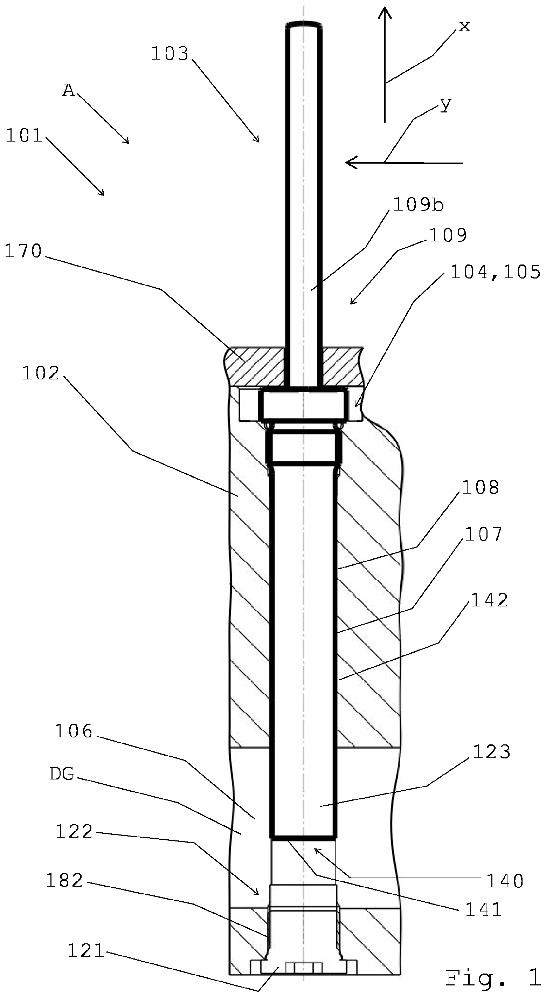

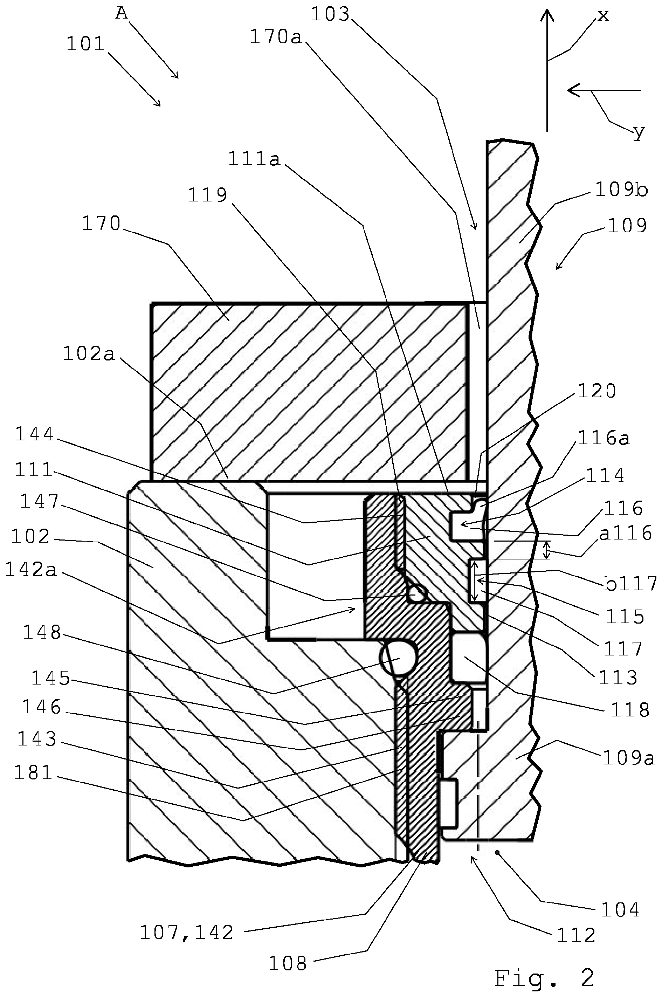

In der Figur 1 ist ein Ausschnitt einer ersten Ausführungsvariante A eines erfindungsgemäßen Tankplattensystems 101, in einer teilweise geschnittenen Darstellung gezeigt. Das Tankplattensystem 101 umfasst eine Tankplatte 102 und eine Vielzahl von Einschraubfedern, wobei in der Figur 1 nur die Einschraubfeder 103 dargestellt ist. Die Figur 2 zeigt ein Detail der Figur 1, wobei die Einschraubfeder 103 geschnitten dargestellt ist.

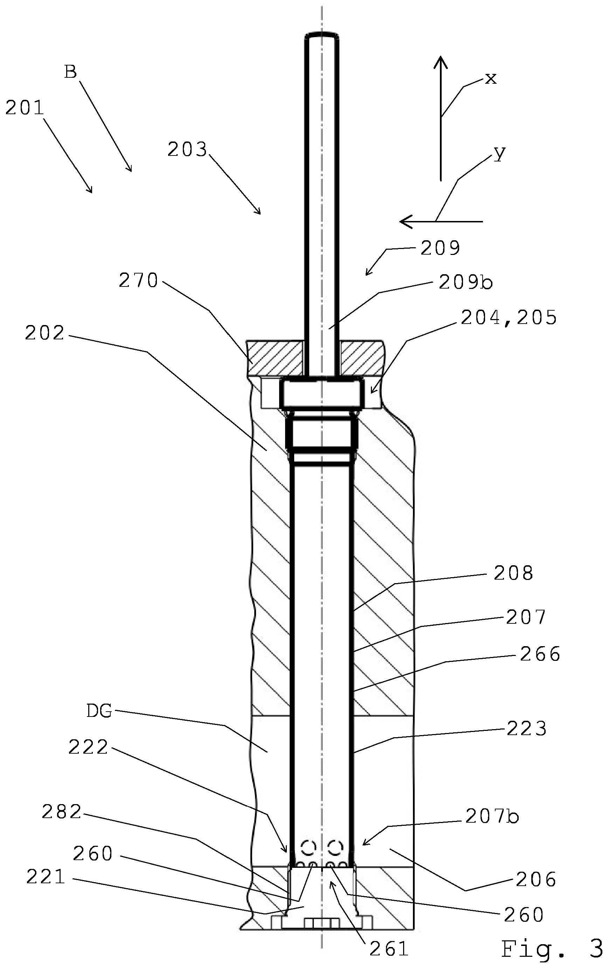

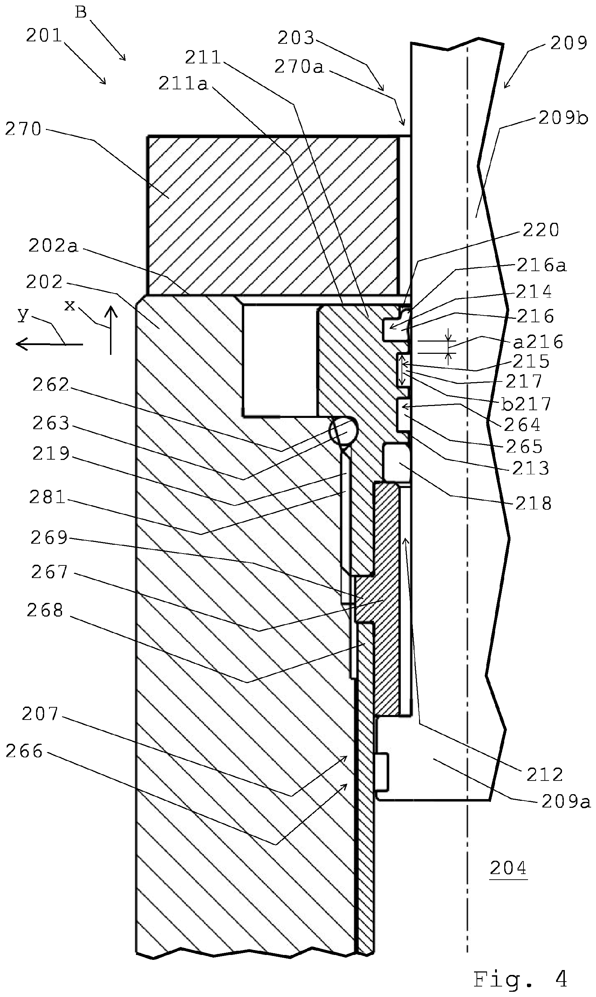

In der Figur 3 ist ein Ausschnitt einer zweiten Ausführungsvariante B eines erfindungsgemäßen Tankplattensystems 201 in einer teilweise geschnittenen Darstellung gezeigt. Das Tankplattensystem 201 umfasst eine Tankplatte 202 und eine Vielzahl von Einschraubfedern, wobei in der Figur 3 nur die Einschraubfeder 203 dargestellt ist. Die Figur 4 zeigt ein Detail der Figur 3, wobei die Einschraubfeder 203 geschnitten dargestellt ist.

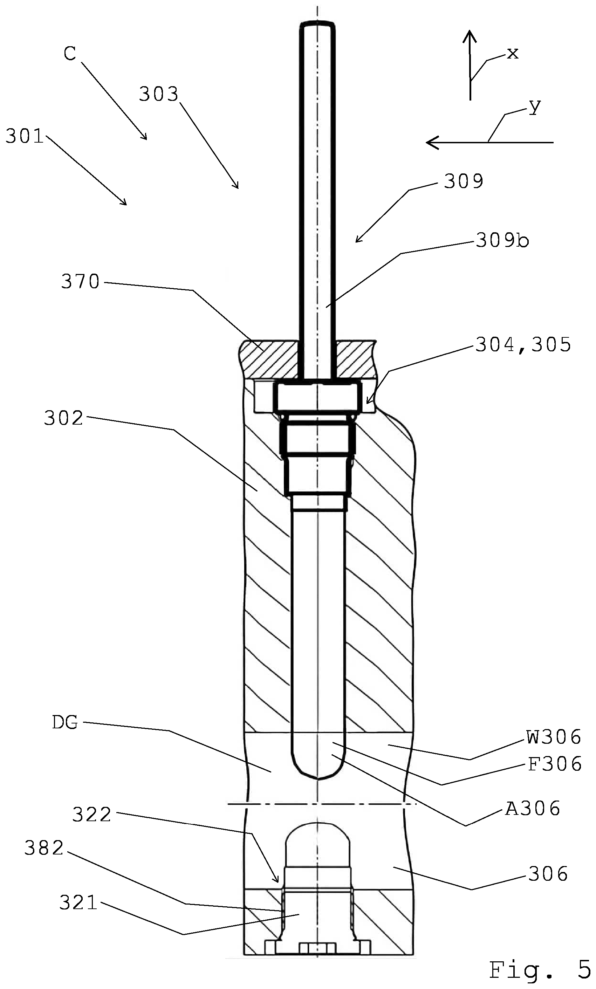

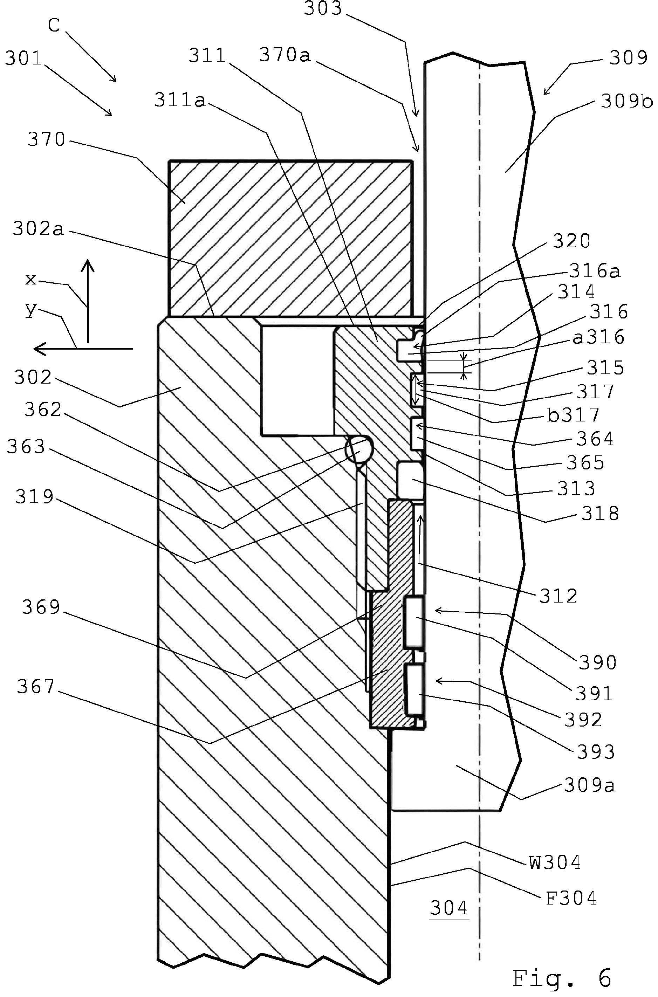

In der Figur 5 ist ein Ausschnitt einer dritten Ausführungsvariante C eines erfindungsgemäßen Tankplattensystems 301 in einer teilweise geschnittenen Darstellung gezeigt. Das Tankplattensystem 301 umfasst eine Tankplatte 302 und eine Vielzahl von Einschraubfedern, wobei in der Figur 5 nur die Einschraubfeder 303 dargestellt ist. Die Figur 6 zeigt ein Detail der Figur 5, wobei die Einschraubfeder 303 geschnitten dargestellt ist.

Das in den Figuren 1 und 2 dargestellten Tankplattensystem 101, welches die erste Ausführungsvariante A zeigt, umfasst eine der Zahl der Einschraubfedern 103 entsprechende Zahl von Aufnahmen 104 für die Einschraubfedern 103. Hierbei ist in den Figuren 1 und 2 nur eine der Aufnahmen 104 sichtbar. Die Aufnahmen 104 sind als Gewindebohrungen 105 ausgebildet und durchlaufen ein Kanalsystem 106 der Tankplatte 102.

Gemäß einer nicht dargestellten weiteren Ausführungsvariante eines Tankplattensystems können Gewindebohrungen auch nur in ein Kanalsystem einer Tankplatte müden.

Die Einschraubfeder 103 ist in die Aufnahme 104 eingesetzt. Jede der Einschraubfedern 103 umfasst einen durch eine Hülse 107 gebildeten Zylinder 108, einen Kolben 109 (siehe Figur 2) und einen Zylinderkopf 111 (siehe Figur 2). Der Kolben 109 ist einteilig ausgebildet und umfasst eine Kolbenscheibe 109a und eine Kolbenstange 109b. Es kann jedoch auch vorgesehen sein, dass der Kolben mehrteilig ausgebildet ist und die Kolbenstange und die Kolbenscheibe zum Beispiel miteinander verschraubt sind.

Der Kolben 109 ist schiebebeweglich durch eine Durchgangsbohrung 112 des Zylinderkopfs 111 geführt. Der Zylinderkopf 111 ist an der Tankplatte 101 indirekt gehalten.

An einer Innenwand 113 des Zylinderkopfs 111 sind eine erste umlaufende Vertiefung 114 und eine zweite umlaufende Vertiefung 115 ausgebildet.

In der ersten umlaufenden Vertiefung 114 ist ein Abstreifer 116 - zur Erhaltung der Übersichtlichkeit ohne Schraffur dargestellt - angeordnet, welcher an der Kolbenstange 109b anliegt. Der Abstreifer 116 ist als ringartiger Abstreifer ausgebildet.

In der zweiten umlaufenden Vertiefung 115 ist ein Führungsring 117 - zur Erhaltung der Übersichtlichkeit ohne Schraffur dargestellt - angeordnet, welcher ebenfalls an der Kolbenstange 109b anliegt.

An dem Zylinderkopf 111 ist eine Dichtung 118 - zur Erhaltung der Übersichtlichkeit ohne Schraffur dargestellt - abgestützt, welche ebenfalls an der Kolbenstange 109 anliegt.

Der Zylinderkopf 111 ist einstückig ausgebildet.

Der Abstreifer 116 weist von dem Führungsring 117 in axialer Richtung x einen Abstand a116 auf, welcher kleiner ist als eine Hälfte einer in axialer Richtung x des Kolbens 109 gemessen Breite b117 des Führungsrings 117.

Der Zylinderkopf 111 ist in die Hülse 107 eingeschraubt und weist hierzu ein Außengewinde 119 auf. Der Zylinderkopf 111 ist indirekt, nämlich unter Zwischenlage der Hülse 107, mit der Tankplatte 102 verschraubt.

Der Zylinderkopf 111 ist unterhalb einer Oberseite 102a der Tankplatte 102 positioniert, wobei der Kolben 109 in einem nicht dargestellten, eingefahrenen Zustand bündig mit der Oberseite 102a der Tankplatte 102 abschließt.

Der Abstreifer 116 umfasst eine Lippe 116a. Die erste umlaufende Vertiefung 114, in welcher der Abstreifer 116 aufgenommen ist, ist derart gestuft ausgebildet und positioniert, dass sich die umlaufende Vertiefung 114 zu einer Oberseite 111a des Zylinderkopfs 111 in axialer Richtung x betrachtet mit einem ringförmigen Kanal 120 öffnet und dass die Lippe 116a des Abstreifers 116 in diesem ringförmigen Kanal 120 aufgenommen ist.

Sofern die Gewindebohrung 105 das Kanalsystem 106 der Tankplatte 102 durchläuft - wie dies bei der in den Figuren 1 und 2 gezeigten ersten Ausführungsvariante A der Fall ist - umfasst jede der Einschraubfedern 103 eine Verschlussschraube 121. Hierbei ist eine durch die Gewindebohrung 105 gebildete untere Öffnung 122 der Tankplatte 102 durch die Verschlussschraube 121 verschlossen, wobei die Verschlussschraube 121 in die Tankplatte 102 eingeschraubt ist.

Die Hülse 107 ist zwischen dem Zylinderkopf 111 und der Verschluss-Schraube 121 gehalten. Damit Druckgas DG aus dem Kanalsystem 106 in die Hülse 107 bzw. den Zylinder 108 ein- und austreten kann, umfasst eine Wandung 123 der Hülse 107 im Bereich des Kanalsystems 106 eine Öffnung 140. Die Öffnung 140 ist in einem Boden 141 der Hülse 107 ausgebildet.

Das Außengewinde 119 des Zylinderkopfs 111 ist in axialer Richtung x betrachtet auf einer Höhe der ersten ringförmigen Vertiefung 114 des Zylinderkopfs 111 ausgebildet.

Die Hülse 107 der Einschraubfeder 103 ist als eine Einschraubhülse 142 ausgebildet. Die Einschraubhülse 142 umfasst ein Außengewinde 143 und ist mit diesem in die Aufnahme 104 der Tankplatte 102 eingeschraubt. Der Zylinderkopf 111 ist mit seinem Außengewinde 119 in ein Innengewinde 144 der Einschraubhülse 142 eingeschraubt.

Die Dichtung 118 ist zwischen dem Zylinderkopf 111 und einer Schulter 145 der Einschraubhülse 142 klemmend gehalten. Hierbei bildet die Schulter 145 auch einen Anschlag 146 für die Kolbenscheibe 109a.

Ein oberer Abschnitt 142a der Einschraubhülse 142 nimmt den Zylinderkopf 111 und eine zusätzliche Dichtung 147 auf, welche den Zylinderkopf 111 gegen die Einschraubhülse abdichtet.

Die Einschraubhülse 142 ist oberhalb ihres Außengewindes 143 mit einer dritten Dichtung 148 gegen die Tankplatte 102 abdichtet.

Das Tankplattensystem 101 kann - wie in den Figuren 1 und 2 als Variante gezeigt - eine Deckplatte 170 umfassen. Die Deckplatte 170 weist zum Durchtritt der Kolbenstangen 109b Durchgangsbohrungen 170a auf und ist an der Tankplatte 102 befestigt. Sofern das Tankplattensystem 101 die Deckplatte 170 umfasst, bildet die Deckplatte 170 die Oberseite der Tankplatte 102, bis zu welcher der Kolben 109 im eingefahrenen Zustand einfedert.

Das in den Figuren 3 und 4 dargestellten Tankplattensystem 201, welches die zweite Ausführungsvariante B zeigt, umfasst eine der Zahl der Einschraubfedern 203 entsprechende Zahl von Aufnahmen 204 für die Einschraubfedern 203. Hierbei ist in den Figuren 3 und 4 nur eine der Aufnahmen 204 sichtbar. Die Aufnahmen 204 sind als Gewindebohrungen 205 ausgebildet und durchlaufen ein Kanalsystem 206 der Tankplatte 202. Die Einschraubfeder 203 ist in die Aufnahme 204 eingesetzt.

Jede der Einschraubfedern 203 umfasst einen durch eine Hülse 207 gebildeten Zylinder 208, einen Kolben 209 (siehe Figur 4) und einen Zylinderkopf 211 (seihe Figur 4). Der Kolben 209 ist einteilig ausgebildet und umfasst eine Kolbenscheibe 209a und eine Kolbenstange 209b. Es kann jedoch auch vorgesehen sein, dass der Kolben mehrteilig ausgebildet ist und die Kolbenstange und die Kolbenscheibe zum Beispiel miteinander verschraubt sind.

Der Kolben 209 ist schiebebeweglich durch eine Durchgangsbohrung 212 des Zylinderkopfs 211 geführt. Der Zylinderkopf 211 ist an der Tankplatte 201 direkt gehalten.

An einer Innenwand 213 des Zylinderkopfs 211 sind eine erste umlaufende Vertiefung 214 und eine zweite umlaufende Vertiefung 215 ausgebildet.

In der ersten umlaufenden Vertiefung 214 ist ein Abstreifer 216 - zur Erhaltung der Übersichtlichkeit ohne Schraffur dargestellt - angeordnet, welcher an der Kolbenstange 209b anliegt. Der Abstreifer 216 ist als ringartiger Abstreifer ausgebildet.

In der zweiten umlaufenden Vertiefung 215 ist ein Führungsring 217 - zur Erhaltung der Übersichtlichkeit ohne Schraffur dargestellt - angeordnet, welcher an der Kolbenstange 209b anliegt.

An dem Zylinderkopf 211 ist eine Dichtung 218 - zur Erhaltung der Übersichtlichkeit ohne Schraffur dargestellt - abgestützt, welche an der Kolbenstange 209b anliegt. Der Zylinderkopf 211 ist einstückig ausgebildet.

Der Abstreifer 216 weist von dem Führungsring 217 in axialer Richtung x einen Abstand a216 auf, welcher kleiner ist als eine Hälfte einer in axialer Richtung x des Kolbens 209 gemessen Breite b217 des Führungsrings 217.

Der Zylinderkopf 211 ist eingeschraubt und weist hierzu ein Außengewinde 219 auf. Der Zylinderkopf 211 ist direkt mit der Tankplatte 202 verschraubt.

Der Zylinderkopf 211 ist unterhalb einer Oberseite 202a der Tankplatte 202 positioniert, wobei der Kolben 209 in einem nicht dargestellten, eingefahrenen Zustand bündig mit der Oberseite 202a der Tankplatte 202 abschließt.

Der Abstreifer 216 umfasst eine Lippe 216a. Die erste umlaufende Vertiefung 214, in welcher der Abstreifer 216 aufgenommen ist, ist derart gestuft ausgebildet und positioniert, dass sich die umlaufende Vertiefung 214 zu einer Oberseite 211a des Zylinderkopfs 211 in axialer Richtung x betrachtet mit einem ringförmigen Kanal 220 öffnet und dass die Lippe 216a des Abstreifers 216 in diesem ringförmigen Kanal 220 aufgenommen ist.

Sofern die Gewindebohrung 205 das Kanalsystem 206 der Tankplatte 202 durchläuft - wie dies bei der in den Figuren 3 und 4 gezeigten zweiten Ausführungsvariante B der Fall ist - umfasst jede der Einschraubfedern 203 eine Verschlussschraube 221. Hierbei ist eine durch die Gewindebohrung 205 gebildete untere Öffnung 222 der Tankplatte 202 durch die Verschlussschraube 221 verschlossen.

Die Hülse 207 ist zwischen dem Zylinderkopf 211 und der Verschlussschraube 221 gehalten. Damit Druckgas DG aus dem Kanalsystem 206 in die Hülse 207 bzw. den Zylinder 208 ein- und austreten kann, umfasst eine Wandung 223 der Hülse 207 im Bereich des Kanalsystems 206 Öffnungen 260.

Die Öffnungen 260 sind an einem unteren Ende 207b der Hülse 207 angeordnet. Entsprechend ist die Hülse 207 zu der Verschlussschraube 221 hin in der Art einer Hirth-Verzahnung 261 ausgebildet.

Zusätzlich oder alternativ können eine oder mehrere Öffnungen auch beabstandet zu der Verschlussschraube 221 an der Wandung 223 der Hülse ausgebildet sein, wie dies in der Figur 3 exemplarisch mit gestrichelten Linien angedeutet ist.

Das Außengewinde 219 des Zylinderkopfs 211 ist unterhalb eines an einer äußeren Mantelfläche 262 des Zylinderkopfes 211 anliegenden Dichtungsrings 263 ausgebildet, mit welchem der Zylinderkopf 211 gegen die Tankplatte 202 abgedichtet ist.

An der Innenwand 213 der Durchgangsbohrung 212 des Zylinderkopfs 211 ist eine dritte ringförmige Vertiefung 264 ausgebildet. In dieser ist ein zweiter Führungsring 265 - zur Erhaltung der Übersichtlichkeit ohne Schraffur dargestellt - aufgenommen, wobei der zweite Führungsring 265 zwischen dem ersten Führungsring 217 und der Dichtung 218 angeordnet ist.

Die Hülse 207 der Einschraubfeder 203 ist als Einsteckhülse 266 ausgebildet, wobei die Einsteckhülse 266 ein Zentrierstück 267 und ein Hülsenrohr 268 umfasst. Hierbei ist das Zentrierstück 267 zwischen dem Zylinderkopf 211 und dem Hülsenrohr 268 angeordnet und der Zylinderkopf 211 und das Hülsenrohr 268 sind durch das Zentrierstück 267 aufeinander ausgerichtet. Alternativ kann die Einsteckhülse auch einteilig ausgebildet sein.

Der Zylinderkopf 211 und das Hülsenrohr 268 sind durch das Zentrierstück 267 voneinander beabstandet, wobei der Zylinderkopf 211 in axialer Richtung x und radialer Richtung y an dem Zentrierstück 267 anliegt und wobei das Hülsenrohr 268 in axialer Richtung x und radialer Richtung y an dem Zentrierstück 267 anliegt. Zur axialen Anlage dient eine umlaufende Schulter 269 des Zentrierstücks 267. Das Zentrierstück 267 bildet einen Anschlag für die Kolbenscheibe 209a.

Das Tankplattensystem 201 kann - wie in den Figuren 3 und 4 als Variante gezeigt - eine Deckplatte 270 umfassen. Die Deckplatte 270 weist zum Durchtritt der Kolbenstangen 209b Durchgangsbohrungen 270a auf und ist an der Tankplatte 202 befestigt. Sofern das Tankplattensystem 201 die Deckplatte 270 umfasst, bildet die Deckplatte 270 die Oberseite der Tankplatte 302, bis zu welcher der Kolben 209 einfedert.

Das in den Figuren 5 und 6 dargestellten Tankplattensystem 301, welches die dritte Ausführungsvariante C zeigt, umfasst eine der Zahl der Einschraubfedern 303 entsprechende Zahl von Aufnahmen 304 für die Einschraubfedern 303. Hierbei ist in den Figuren 5 und 6 nur eine der Aufnahmen 304 sichtbar. Die Aufnahmen 304 sind als Gewindebohrungen 305 ausgebildet und durchlaufen ein Kanalsystem 306 der Tankplatte 302. Die Einschraubfeder 303 ist in die Aufnahme 304 eingesetzt.

Jede der Einschraubfedern 303 umfasst, einen Kolben 309 und einen Zylinderkopf 311 (siehe Figur 6). Der Kolben 309 ist einteilig ausgebildet und umfasst eine Kolbenscheibe 309a und eine Kolbenstange 309b. Es kann jedoch auch vorgesehen sein, dass der Kolben mehrteilig ausgebildet ist und die Kolbenstange und die Kolbenscheibe zum Beispiel miteinander verschraubt sind.

Der Kolben 309 ist mit seiner Kolbenstange 309b schiebebeweglich durch eine Durchgangsbohrung 312 des Zylinderkopfs 311 geführt. Der Zylinderkopf 311 ist an der Tankplatte 301 direkt gehalten.

An einer Innenwand 313 des Zylinderkopfs 311 sind eine erste umlaufende Vertiefung 314 und eine zweite umlaufende Vertiefung 315 ausgebildet.

In der ersten umlaufenden Vertiefung 314 ist ein Abstreifer 316 - zur Erhaltung der Übersichtlichkeit ohne Schraffur dargestellt - angeordnet, welcher an der Kolbenstange 309b anliegt. Der Abstreifer 316 ist als ringartiger Abstreifer ausgebildet.

In der zweiten umlaufenden Vertiefung 315 ist ein Führungsring 317 - zur Erhaltung der Übersichtlichkeit ohne Schraffur dargestellt - angeordnet, welcher an der Kolbenstange 309b anliegt.

An dem Zylinderkopf 311 ist eine Dichtung 318 - zur Erhaltung der Übersichtlichkeit ohne Schraffur dargestellt - abgestützt, welche an der Kolbenstange 309b anliegt. Der Zylinderkopf 211 ist einstückig ausgebildet.

Der Abstreifer 316 weist von dem Führungsring 317 in axialer Richtung x einen Abstand a316 auf, welcher kleiner ist als eine Hälfte einer in axialer Richtung x des Kolbens 309 gemessen Breite b317 des Führungsrings 317.

Der Zylinderkopf 311 ist eingeschraubt und weist hierzu ein Außengewinde 319 auf. Der Zylinderkopf 311 ist direkt mit der Tankplatte 302 verschraubt.

Der Zylinderkopf 311 ist unterhalb einer Oberseite 302a der Tankplatte 302 positioniert, wobei der Kolben 309 in einem nicht dargestellten, eingefahrenen Zustand bündig mit der Oberseite 302a der Tankplatte 302 abschließt.

Der Abstreifer 316 umfasst eine Lippe 316a. Die erste umlaufende Vertiefung 314, in welcher der Abstreifer 316 aufgenommen ist, ist derart gestuft ausgebildet und positioniert, dass sich die umlaufende Vertiefung 314 zu einer Oberseite 311a des Zylinderkopfs 311 in axialer Richtung x betrachtet mit einem ringförmigen Kanal 320 öffnet und dass die Lippe 316a des Abstreifers 316 in diesem ringförmigen Kanal 320 aufgenommen ist.

Sofern die Gewindebohrung 305 das Kanalsystem 306 der Tankplatte 302 durchläuft - wie dies bei der in den Figuren 5 und 6 gezeigten dritten Ausführungsvariante C der Fall ist - umfasst jede der Einschraubfedern 303 eine Verschlussschraube 321. Hierbei ist eine durch die Gewindebohrung 305 gebildete untere Öffnung 322 der Tankplatte 302 durch die Verschlussschraube 321 verschlossen, wobei die Verschlussschraube 321 in die Tankplatte 302 eingeschraubt ist.

Durch in dem Kanalsystem 306 vorhandenes Druckgas DG, welches auf die Kolbenscheibe 309a des Kolbens 309 wirkt, wird der Kolben 309 in x-Richtung aus der Druckplatte 302 gedrückt.

Das Außengewinde 319 des Zylinderkopfs 311 ist unterhalb eines an einer äußeren Mantelfläche 362 des Zylinderkopfes 311 anliegenden Dichtungsrings 363 ausgebildet, mit welchem der Zylinderkopf 311 gegen die Tankplatte 302 abgedichtet ist.

An der Innenwand 313 der Durchgangsbohrung 312 des Zylinderkopfs 311 ist eine dritte ringförmige Vertiefung 364 ausgebildet. In dieser ist ein zweiter Führungsring 365 - zur Erhaltung der Übersichtlichkeit ohne Schraffur dargestellt - aufgenommen, wobei der zweite Führungsring 365 zwischen dem ersten Führungsring 317 und der Dichtung 318 angeordnet ist.

Ein Zentrierstück 367 bildet einen Anschlag für die Kolbenscheibe 309a Unterhalb des Zentrierstücks 367 bildet eine Wandung W304 der Aufnahme 304 eine Führungsfläche F304, an welcher die Kolbenscheibe 309a des Kolbens 309 bei einer Aus- und Einfahrbewegung des Kolbens 309 geführt ist.

Sofern der Kolben 309 mit seiner Kolbenscheibe 309a beim Einfedern bis in das Kanalsystem 306 eintaucht, kann eine weitere Führungsfläche F306, an welcher die Kolbenscheibe 309a des Kolbens 309 bei einer Aus- und Einfahrbewegung des Kolbens 309 geführt ist, durch einen Abschnitt A306 einer Wandung W306 des Kanalsystems 306 gebildet sein. Sofern der Kolben 309 beim Einfedern derart weit in die Druckplatte 302 eintaucht, ist der Kolben 309 mit seiner Kolbenscheibe 309a an gegenüberliegenden Seiten an der Wandung W306 des Kanalsystems 306 geführt.

Der Zylinderkopf 311 liegt in axialer Richtung x und radialer Richtung y an dem Zentrierstück 367 an. Zur axialen Anlage dient eine umlaufende Schulter 369 des Zentrierstücks 367.

Das Zentrierstück 367 umfasst zu der Kolbenstange 309b des Kolbens 309 hin eine erste Vertiefung 390, in welcher ein dritter Führungsring 391 aufgenommen ist, und eine zweite Vertiefung 392, in welcher ein vierter Führungsring 393 aufgenommen ist. Die Kolbenstange 309b ist durch den dritten und vierten Führungsring 391, 393 zusätzlich geführt und somit über eine Strecke geführt, welche wenigstens das Doppelte eines Durchmessers der Kolbenstange 309b beträgt.

Das Tankplattensystem 301 kann - wie in den Figuren 5 und 6 als Variante gezeigt - eine Deckplatte 370 umfassen. Die Deckplatte 370 weist zum Durchtritt der Kolbenstangen 309b Durchgangsbohrungen 370a auf und ist an der Tankplatte 302 befestigt. Sofern das Tankplattensystem 301 die Deckplatte 370 umfasst, bildet die Deckplatte 370 die Oberseite der Tankplatte 302, bis zu welcher der Kolben 309 einfedert.

Bei den Ausführungsvarianten A (Figuren 1 und 2) und B (Figuren 3 und 4) und C (Figuren 5 und 6) umfassen die Aufnahmen 104, 204, 304 jeweils ein oberes Innengewinde 181, 281, 381 und ein unteres Innengewinde 182, 282, 382. Hierbei sind die Gewinde jeweils an der Tankplatte 102, 202, 303 ausgebildet.

Bei der Ausführungsvariante A ist die Hülse 107 in das obere Innengewinde 181 eingeschraubt und ist die Verschlussschraube 121 in das untere Innengewinde 182 eingeschraubt.

Bei der Ausführungsvariante B ist der Zylinderkopf 211 in das obere Innengewinde 281 eingeschraubt und ist die Verschlussschraube 221 in das untere Innengewinde 282 eingeschraubt.

Bei der Ausführungsvariante C ist der Zylinderkopf 311 in das obere Innengewinde 381 eingeschraubt und ist die Verschlussschraube 321 in das untere Innengewinde 382 eingeschraubt.

### Bezugszeichenliste

- 101: Tankplattensystem (erste Ausführungsvariante A)
- 102: Tankplatte von 101
- 102a: Oberseite von 102
- 103: Einschraubfeder von 101
- 104: Aufnahme von 101
- 105: Gewindebohrung
- 106: Kanalsystem von 101
- 107: Hülse
- 108: Zylinder
- 109: Kolben
- 109a: Kolbenscheibe von 109e
- 109b: Kolbenstange von 109
- 110: nicht belegt
- 111: Zylinderkopf
- 111a: Oberseite von 111
- 112: Durchgangsbohrung in 111
- 113: Innenwand von 111
- 114: erste Vertiefung an 111
- 115: zweite Vertiefung an 111
- 116: Abstreifer in 114
- 116a: Lippe von 116
- 117: Führungsring in 115
- 118: Dichtung abgestützt an 111
- 119: Außengewinde von 111
- 120: ringförmiger Kanal gebildet durch 111
- 121: Verschlussschraube
- 122: untere Öffnung von 105
- 123: Wandung von 107

- 140: Öffnung in 123
- 141: Boden von 107
- 142: Einschraubhülse
- 142a: oberer Abschnitt von 142
- 143: Außengewinde von 142
- 144: Innengewinde von 142
- 145: Schulter von 142
- 146: Anschlag für 109a
- 147: zusätzlich Dichtung zwischen 111 und 142
- 148: dritte Dichtung zwischen 142 und 102
- 170: Deckplatte
- 170a: Durchgangsbohrung in 170

- 181: oberes Gewinde von 104
- 182: unteres Gewinde von 104

- A: erste Ausführungsvariante
- a116: Abstand zwischen 116 und 117
- b117: Breite von 117

- DG: Druckgas
- x: axiale Richtung
- y: radiale Richtung

- 201: Tankplattensystem (zweite Ausführungsvariante B)
- 202: Tankplatte von 201
- 202a: Oberseite von 202
- 203: Einschraubfeder von 201
- 204: Aufnahme von 201
- 205: Gewindebohrung
- 206: Kanalsystem von 201
- 207: Hülse
- 207b: unteres Ende von 207
- 208: Zylinder
- 209: Kolben
- 209a: Kolbenscheibe von 209
- 209b: Kolbenstange von 209
- 210: nicht belegt
- 211: Zylinderkopf
- 211a: Oberseite von 211
- 212: Durchgangsbohrung in 211
- 213: Innenwand von 211
- 214: erste Vertiefung an 211
- 215: zweite Vertiefung an 211
- 216: Abstreifer in 214
- 216a: Lippe von 216
- 217: (erster) Führungsring in 215
- 218: Dichtung abgestützt an 211
- 219: Außengewinde von 211
- 220: ringförmiger Kanal gebildet durch 211
- 221: Verschlussschraube
- 222: untere Öffnung von 205
- 223: Wandung von 207

- 246: Anschlag für 209a

- 260: Öffnungen
- 261: Hirth-Verzahnung
- 262: Mantelfläche von 211
- 263: Dichtungsring
- 264: dritte ringförmige Vertiefung
- 265: zweiter Führungsring
- 266: Einsteckhülse
- 267: Zentrierstück
- 268: Hülsenrohr
- 269: Schulter von 267
- 270: Deckplatte
- 270a: Durchgangsbohrung in 270

- 281: oberes Gewinde von 204
- 282: unteres Gewinde von 204

- B: zweite Ausführungsvariante
- a216: Abstand zwischen 216 und 217
- b217: Breite von 217
- 301: Tankplattensystem (dritte Ausführungsvariante C)
- 302: Tankplatte von 301
- 302a: Oberseite von 302
- 303: Einschraubfeder von 201
- 304: Aufnahme von 301
- 305: Gewindebohrung
- 306: Kanalsystem von 301
- 307: nicht belegt
- 307b: nicht belegt
- 308: nicht belegt
- 309: Kolben
- 309a: Kolbenscheibe von 309
- 309b: Kolbenstange von 309
- 310: nicht belegt
- 311: Zylinderkopf
- 311a: Oberseite von 311
- 312: Durchgangsbohrung in 311
- 313: Innenwand von 311
- 314: erste Vertiefung an 311
- 315: zweite Vertiefung an 311
- 316: Abstreifer in 314
- 316a: Lippe von 316
- 317: (erster) Führungsring in 315
- 318: Dichtung abgestützt an 311
- 319: Außengewinde von 311
- 320: ringförmiger Kanal gebildet durch 311
- 321: Verschlussschraube
- 322: untere Öffnung von 305
- 323: Wandung von 307

- 346: Anschlag für 309a

- 360: Öffnungen
- 361: Hirth-Verzahnung
- 362: Mantelfläche von 311
- 363: Dichtungsring
- 364: dritte ringförmige Vertiefung
- 365: zweiter Führungsring
- 366: Einsteckhülse
- 367: Zentrierstück
- 368: Hülsenrohr
- 369: Schulter von 367
- 370: Deckplatte
- 370a: Durchgangsbohrung in 370

- 381: oberes Gewinde von 304
- 382: unteres Gewinde von 304

- 390: erste Vertiefung an 367
- 391: dritter Führungsring
- 392: zweite Vertiefung an 367
- 393: vierter Führungsring

- C: dritte Ausführungsvariante
- A306: Abschnitt von W306
- A316: Abstand zwischen 316 und 317
- B317: Breite von 317
- F304: Führungsfläche gebildet durch W304
- F306: Führungsfläche gebildet durch W306
- W304: Wandung von 304
- W306: Wandung von 306

## Patentansprüche

1. Tankplattensystem (101; 201; 301) umfassend eine Tankplatte (102; 202; 302) und Einschraubfedern (103; 203; 303),
- wobei die Tankplatte (102; 202; 302) eine der Zahl der Einschraubfedern (103; 203; 303) entsprechende Zahl von Aufnahmen (104; 204; 304) für Einschraubfedern (103; 203; 303) umfasst, wobei die Aufnahmen (104; 204; 304) als Gewindebohrungen (105; 205;305) ausgebildet sind, welche in ein Kanalsystem (106; 206; 306) der Tankplatte (102; 202; 302) münden oder dieses durchlaufen,
- wobei jede der Einschraubfedern (103; 203; 303) in eine der Aufnahmen (104; 204; 304) eingesetzt ist,
- wobei jede der Einschraubfedern (103; 203; 303) einen Kolben (109; 209; 309) und einen Zylinderkopf (111; 211; 311) umfasst,
- wobei der Kolben (109; 209; 309) schiebebeweglich durch eine Durchgangsbohrung (112; 212; 312) des Zylinderkopfs (111; 211; 311) geführt ist,
- wobei der Zylinderkopf (111; 211; 311) an der Tankplatte (102; 202; 302) gehalten ist,
- wobei an einer Innenwand (113; 213; 313) des Zylinderkopfs (111; 211; 311) eine erste umlaufende Vertiefung (114; 214; 314) und eine zweite umlaufende Vertiefung (115; 215; 315) ausgebildet sind,
- wobei in der ersten umlaufenden Vertiefung (114; 214; 314) ein Abstreifer (116; 216; 316) angeordnet ist, welcher an dem Kolben (109; 209; 309) anliegt,
- wobei in der zweiten umlaufenden Vertiefung (115; 215; 315) ein Führungsring (117; 217; 317) angeordnet ist, welcher an dem Kolben (109; 209; 309) anliegt,
- wobei an dem Zylinderkopf (111; 211; 311) eine Dichtung (118; 218; 318) abgestützt ist, welche an dem Kolben (109; 209; 309) anliegt,
- wobei der Zylinderkopf (111; 211; 311) einstückig ausgebildet ist,
- wobei der Abstreifer (116; 216; 316) von dem Führungsring (117; 217; 317) in axialer Richtung (x) einen Abstand (a116; a216; a316) aufweist, welcher kleiner ist als eine Hälfte einer in axialer Richtung (x) des Kolbens (109; 209; 309) gemessen Breite (b117; b217; b317) des Führungsrings (117; 217; 317).

2. Tankplattensystem nach Anspruch 1, **dadurch gekennzeichnet, dass** jede der Einschraubfedern (103; 203) einen durch eine Hülse (107; 207) gebildeten Zylinder (108; 208) umfasst.

3. Tankplattensystem nach Anspruch 1 und/oder 2, **dadurch gekennzeichnet, dass** der Zylinderkopf (111; 211; 311) eingeschraubt ist und hierzu mit einem Außengewinde (119; 219; 319) versehen ist, wobei es insbesondere vorgesehen ist, dass der Zylinderkopf (211; 311) direkt mit der Tankplatte (202; 302) verschraubt ist oder dass der Zylinderkopf (111) indirekt unter Zwischenlage der Hülse (107) mit der Tankplatte (102) verschraubt ist.

4. Tankplattensystem nach wenigstens einem der vorhergehenden Ansprüche, **dadurch gekennzeichnet, dass** der Zylinderkopf (111; 211; 311) auf gleicher Höhe oder unterhalb einer Oberseite (102a; 202a; 302a) der Tankplatte (102; 202; 302) positioniert ist, wobei der Kolben (109; 209; 309) in seinem eingefahrenen Zustand bündig mit der Oberseite (102a; 202a; 302a) der Tankplatte (102; 202; 302) abschließt.

5. Tankplattensystem nach wenigstens einem der vorhergehenden Ansprüche, **dadurch gekennzeichnet, dass** der Abstreifer (116; ;216; 316) eine Lippe (116a; 216a; 316a) umfasst und dass die erste umlaufende Vertiefung (114; 214; 314) derart gestuft ausgebildet und positioniert ist, dass sich diese zu einer Oberseite (111a; 211a; 311a) des Zylinderkopfs (111; 211; 311) in axialer Richtung (x) betrachtet mit einem ringförmigen Kanal (120; 220; 320) öffnet und dass die Lippe (116a; 216a; 316a) des Abstreifers (116; 216; 316) in diesem ringförmigen Kanal (120; 220; 320) aufgenommen ist.

6. Tankplattensystem nach wenigstens einem der vorhergehenden Ansprüche, **dadurch gekennzeichnet, dass** das Tankplattensystem (101; 201; 301) eine Deckplatte (170; 270; 370) umfasst, welche die Zylinderköpfe (111; 211; 311) abdeckt und für jeden der Kolben (109; 209; 309) eine Durchgangsbohrung (170a; 270a; 370a) umfasst.

7. Tankplattensystem nach Anspruch 3, **dadurch gekennzeichnet, dass** das Außengewinde (119) des Zylinderkopfs (111) in axialer Richtung (x) betrachtet auf einer Höhe der ersten ringförmigen Vertiefung (114) und/oder der zweiten ringförmigen Vertiefung (115) ausgebildet ist.

8. Tankplattensystem nach Anspruch 2 und/oder Anspruch 3, **dadurch gekennzeichnet,**
- **dass** die Hülse (107) der Einschraubfeder (103) als eine Einschraubhülse (142) ausgebildet ist,
- **dass** die Einschraubhülse (142) mit einem Außengewinde (143) in die Aufnahme (104) der Tankplatte (102) eingeschraubt ist,
- **dass** der Zylinderkopf (111) mit seinem Außengewinde (119) in ein Innengewinde (144) der Einschraubhülse (142) eingeschraubt ist.

9. Tankplattensystem nach Anspruch 8, **dadurch gekennzeichnet, dass** die Dichtung (118) zwischen dem Zylinderkopf (111) und der Einschraubhülse (142) gehalten ist.

10. Tankplattensystem nach Anspruch 8 und/oder Anspruch 9, **dadurch gekennzeichnet, dass** ein oberer Abschnitt (142a) der Einschraubhülse (142) den Zylinderkopf (111) und eine zusätzlich Dichtung (147) aufnimmt.

11. Tankplattensystem nach Anspruch 3, **dadurch gekennzeichnet, dass** das Außengewinde (219) des Zylinderkopfs (211) unterhalb eines an einer Mantelfläche des Zylinderkopfes anliegenden Dichtungsrings (263) ausgebildet ist, mit welchem der Zylinderkopf (211) gegen die Tankplatte (202) abgedichtet ist.

12. Tankplattensystem nach wenigstens einem der Ansprüche 1 bis 6 und/oder 11, **dadurch gekennzeichnet, dass** an einer Innenwand (213; 313) der Durchgangsbohrung (212; 312) des Zylinderkopfs (211; 311) eine dritte ringförmige Vertiefung (264; 364) ausgebildet ist, in welcher ein zweiter Führungsring (265; 365) aufgenommen ist, derart dass der zweite Führungsring (265; 365) zwischen dem ersten Führungsring (217; 317) und der Dichtung (218; 318) angeordnet ist.

13. Tankplattensystem nach Anspruch 2, **dadurch gekennzeichnet,**
- **dass** die Hülse (207) der Einschraubfeder (203) als Einsteckhülse (266) ausgebildet ist,
- **dass** die Einsteckhülse (266) ein Zentrierstück (267) und ein Hülsenrohr (268) umfasst,
- **dass** das Zentrierstück (267) zwischen dem Zylinderkopf (211) und dem Hülsenrohr (268) angeordnet ist und
- **dass** der Zylinderkopf (211) und das Hülsenrohr (268) durch das Zentrierstück (267) aufeinander ausgerichtet sind.

14. Tankplattensystem nach Anspruch 13, **dadurch gekennzeichnet,**
- **dass** der Zylinderkopf (211) und das Hülsenrohr (268) durch das Zentrierstück (267) voneinander beabstandet sind,
- **dass** der Zylinderkopf (211) in axialer Richtung (x) und in radialer Richtung (y) an dem Zentrierstück (267) anliegt und
- **dass** das Hülsenrohr (268) in axialer Richtung (x) und in radialer Richtung (y) an dem Zentrierstück (267) anliegt.

15. Tankplattensystem nach Anspruch 2 und/oder Anspruch 3 und/oder Anspruch 8, **dadurch gekennzeichnet, dass** jeder der Einschraubfedern (103; 203) eine Verschlussschraube (121; 221) zugeordnet ist, sofern eine für diese vorgesehene Gewindebohrung (105; 205) das Kanalsystem (106; 206) der Tankplatte (102; 202) durchläuft, wobei eine untere Öffnung (122; 222) der Gewindebohrung (105; 205) durch die Verschlussschraube (121; 221) verschlossen ist, wobei die Hülse (107; 207) zwischen dem Zylinderkopf (111; 211) und der Verschlussschraube (121; 221) gehalten ist und wobei eine Wandung (123; 223) der Hülse (107; 207) im Bereich des Kanalsystems (106; 206) eine oder mehrere Öffnungen (140; 260) umfasst.

16. Tankplattensystem nach Anspruch 15, **dadurch gekennzeichnet, dass** die mehreren Öffnungen (260) derart an einem unteren Ende (207b) der Hülse (207) angeordnet sind, dass die Hülse (207) zu der Verschlussschraube (221) hin ähnlich einer Hirth-Verzahnung (261) ausgebildet ist.

17. Tankplattensystem nach Anspruch 1, **dadurch gekennzeichnet, dass** eine Wandung (W304) der Aufnahme (304) eine Führungsfläche (F304) bildet, an welcher eine Kolbenscheibe (309a) des Kolbens (309) bei einer Aus- und Einfahrbewegung des Kolbens (309) geführt ist.

18. Tankplattensystem nach Anspruch1, dass ein Abschnitt (A306) einer Wandung (W306) des Kanalsystems (306) eine weitere Führungsfläche (F306) bildet, an welcher eine Kolbenscheibe (309a) des Kolbens (309) bei einer Aus- und Einfahrbewegung des Kolbens (309) geführt ist.
